# FASCICULE DE BREVET EUROPEEN

(11) **EP 4 391 526 B1**
(45) Date de publication et mention de la délivrance du brevet: **12.08.2026**
(21) Numéro de dépôt: 23219629.5
(22) Date de dépôt: 22.12.2023
(51) Int. Cl.: H04N 7/18, G06F 21/60, G08B 13/196, H04L 9/40, G06F 21/10

(54) **PROCÉDÉS D'ÉMISSION ET DE RÉCEPTION D'UNE IMAGE REPRÉSENTANT AU MOINS UN OBJET, DISPOSITIFS ÉLECTRONIQUES D'ÉMISSION ET DE RÉCEPTION ET PRODUITS PROGRAMME D'ORDINATEUR ASSOCIÉS**
VERFAHREN ZUM SENDEN UND EMPFANGEN EINES BILDES, DAS MINDESTENS EIN OBJEKT DARSTELLT, ELEKTRONISCHE SENDE- UND EMPFANGSVORRICHTUNGEN UND COMPUTERPROGRAMMPRODUKTE DAFÜR
METHODS FOR TRANSMITTING AND RECEIVING AN IMAGE REPRESENTING AT LEAST ONE OBJECT, ELECTRONIC DEVICES FOR TRANSMITTING AND RECEIVING AND ASSOCIATED COMPUTER PROGRAM PRODUCTS

(30) Priorité: 23.12.2022 FR 2214422
(43) Date de publication de la demande: 26.06.2024
(73) Titulaire: THALES, 92190 Meudon (FR)
(72) Inventeur: MARTINS, Cyrille, 91767 PALAISEAU CEDEX (FR); HAUGEARD, Jean-Emmanuel, 91767 PALAISEAU CEDEX (FR); CHIETERA, Andreina, 91767 PALAISEAU CEDEX (FR)
(74) Mandataire: Lavoix

(56) Documents cités:
- WO-A1-2019/245680
- US-A1- 2019 182 045
- US-A1- 2019 218 407
- US-A1- 2020 280 543
- US-B2- 9 639 747

## Description

La présente invention concerne un procédé d'émission d'une image représentant au moins un objet. La présente invention concerne également un produit programme d'ordinateur propre à mettre en œuvre un tel procédé d'émission et un dispositif électronique d'émission d'une image représentant au moins un objet.

La présente invention concerne également un procédé de réception d'une image. La présente invention concerne également un produit programme d'ordinateur propre à mettre en œuvre un tel procédé de réception et un dispositif électronique de réception d'une image représentant au moins un objet.

La présente invention concerne plus précisément le domaine du chiffrement et du déchiffrement d'informations contenues dans une image.

L'intérêt du public pour la confidentialité d'informations transmises s'est récemment fortement renforcé, particulièrement concernant la protection des données personnelles relatives à des personnes physiques.

A titre d'exemple, au sein de l'union européenne, le Règlement Général sur la Protection des Données (RGPD) illustre cet intérêt croissant.

Ce règlement impose notamment la confidentialité comme standard de conception des dispositifs de communication de données personnelles.

Ainsi, lors de la transmission d'informations, il est désormais recommandé que seuls des utilisateurs autorisés à consulter les informations transmises, soient propres à accéder aux dites informations.

Dans le contexte de la vidéo-surveillance, il est connu de transférer des images par des canaux de communication sécurisés. Cependant, une telle communication est complexe à mettre en œuvre. En outre, une telle communication induit des coûts élevés car les moyens de communication sur des canaux sécurisés requièrent des infrastructures spécifiques.

En variante, il est connu, d'appliquer un floutage total aux images, de les transmettre dans cet état, et de communiquer uniquement à un destinataire choisi, une clef permettant de déflouter totalement l'image.

Toutefois, cette technique du type tout-ou-rien, permet uniquement d'assurer la confidentialité des données personnelles lorsque le destinataire est autorisé à consulter l'intégralité du contenu des images. Ainsi, la confidentialité des données personnelles n'est pas optimale.

WO 2019/245 680 A1 décrit un procédé de surveillance vidéo sécurisée avec des fonctionnalités de confidentialité comprenant le traitement d'un flux vidéo sur un dispositif de caméra pour identifier des objets de confidentialité exploitables (APO), l'extraction de coordonnées associées aux APO identifiés dans un flux de métadonnées et le masquage des APO identifiés dans le flux vidéo.

US 2019/218407 A1 décrit un procédé dans lequel une image est rédactée en masquant certains objets (visages) et en gardant les parties masquées dans un fichier de meta-données qui est chiffré de telle manière qu'il puisse être déchiffré en utilisant plusieurs clés différentes, lesdites étant distribuées aux utilisateurs autorisés. Lesdites clés de déchiffrage ne permettent néanmoins pas un déchiffrage sélectif du fichier de meta-données.

La présente invention vise à permettre d'assurer, de manière simple, la confidentialité des données personnelles présentes sur une image lors de leur communication.

A cet effet, la présente invention a pour objet un procédé d'émission selon la revendication 1.

Avec le procédé d'émission selon l'invention, il est possible d'émettre une image qui protège les données personnelles, tout en étant partiellement déchiffrable pour un utilisateur autorisé à consulter une partie de son contenu.

Cet effet est notamment obtenu grâce à l'obfuscation de la ou des zones identifiées, ainsi que par la clef secrète individuelle propre à permettre uniquement un déchiffrement de certaines valeurs des pixels, i.e. de certaine(s) zone(s).

Selon des modes de réalisation particuliers de l'invention, le procédé d'émission est, selon l'une quelconque des revendications 2 à 4.

La présente invention a également pour objet un produit programme d'ordinateur selon la revendication 5.

La présente invention a également pour objet un dispositif électronique d'émission selon la revendication 6.

La présente invention a également pour objet un procédé de réception selon la revendication 7.

Avec le procédé de réception selon l'invention, il est possible de ne déchiffrer qu'une partie d'une image pour laquelle seulement certains objets sont autorisés à être consultés.

Cet effet est notamment obtenu par la clef secrète individuelle qui ne permet de déchiffrer qu'une partie du message chiffré. Ainsi, l'image partiellement reconstituée préserve la confidentialité des objets que le dispositif de réception n'est pas autorisé à consulter.

La présente invention a également pour objet un produit programme d'ordinateur selon la revendication 8.

La présente invention a également pour objet un dispositif électronique de réception selon la revendication 9.

La présente invention a également pour objet un système électronique de communication selon la revendication 10.

Le système de communication permet d'améliorer, de manière simple, la confidentialité des données personnelles.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système de communication selon l'invention comprenant un dispositif électronique d'émission et au moins un dispositif électronique de réception selon l'invention ;
- la figure 2 est un exemple d'image acquise par le dispositif électronique d'émission de la figure 1 ;
- la figure 3 est un exemple d'image avec zone(s) obfusquée(s) émise par le dispositif électronique d'émission de la figure 1, à destination du ou des dispositifs électroniques de réception de la figure 1 ;

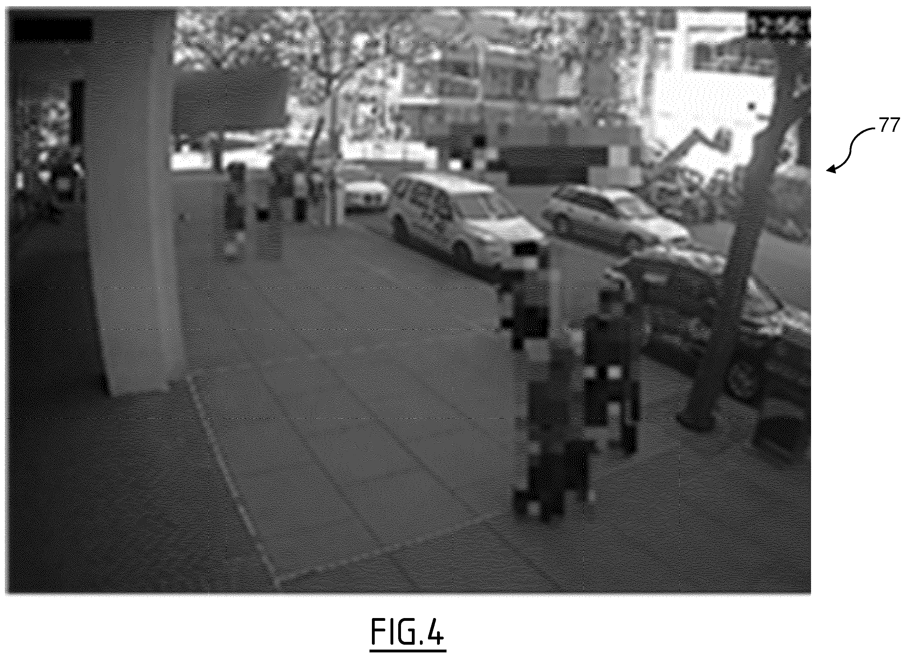

- la figure 4 est un exemple d'image partiellement reconstituée obtenue par le ou l'un des dispositifs électroniques de réception de la figure 1 ;
- la figure 5 est un organigramme d'un procédé d'émission selon l'invention, mis en œuvre par le dispositif électronique d'émission de la figure 1 ; et
- la figure 6 est un organigramme d'un procédé de réception selon l'invention, mis en œuvre par chaque dispositif électronique de réception de la figure 1.

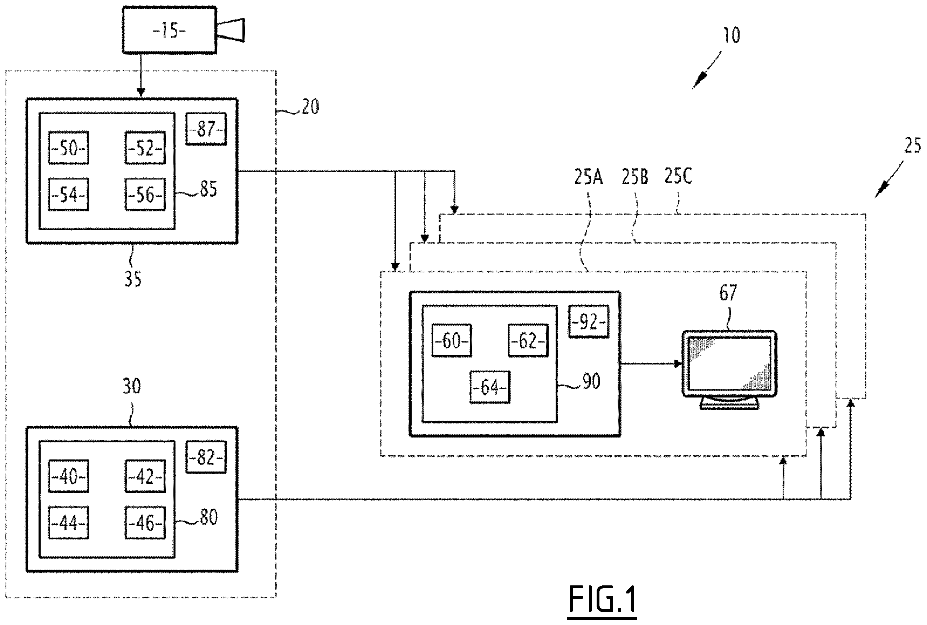

En référence à la figure 1, on décrit un système électronique de communication 10. Le système électronique de communication 10 est propre à être connecté à une caméra 15.

Le système de communication 10 comprend un dispositif électronique d'émission 20 et au moins un dispositif électronique de réception 25. Dans l'exemple de la figure 1, le système de communication 10 comprend plusieurs dispositifs de réception 25.

La caméra 15 est par exemple une caméra de vidéosurveillance dans une rue d'une ville. La caméra 15 est propre à capturer des images 37 d'un environnement. Sur les images capturées 37 par la caméra 15, sont par exemple visibles plusieurs objets d'intérêt, aussi appelés objets. Les objets d'intérêt comprennent par exemple des silhouettes de passants dans la rue, des visages desdits passants, et des véhicules.

Ainsi, chaque image capturée 37 par la caméra 15 représente au moins un desdits objets.

La caméra 15 est par exemple connectée au dispositif d'émission 20 et propre à lui envoyer les images capturées 37.

Le dispositif d'émission 20 comprend une unité de configuration 30 et une unité de chiffrement 35.

L'unité de configuration 30 comprend un module d'envoi 40 de clef(s) secrète(s) individuelle(s) Iₛ, à chaque dispositif de réception 25. Préférentiellement, l'unité de configuration 30 comprend en outre un module 42 d'acquisition d'une table de correspondance, un module 44 de détermination d'une clef publique maître Mₚ et d'une clef secrète maître Mₛ, et un module 46 de calcul de la ou des clefs secrètes individuelles Iₛ.

L'unité de chiffrement 35 comprend un module 50 d'obtention d'au moins une image 37 respective depuis la caméra 15, un module 52 d'application d'une obfuscation à des parties de l'image qui seront détaillées ci-après, un module 54 de génération d'un message chiffré et un module 56 d'émission, à destination de chaque dispositif de réception 25, d'éléments issus des modules d'application 52 et de génération 54.

Chaque dispositif de réception 25 comprend un module de réception 60, un module 62 de déchiffrement du message chiffré et un module 64 de reconstitution d'une image.

Chaque dispositif de réception 25 est associé à un utilisateur. Dans l'exemple représenté sur la figure 1, le système de communication 10 comprend un premier 25A, un deuxième 25B et un troisième 25C dispositifs de réception. Le premier dispositif de réception 25A est par exemple associé à un vigile surveillant une entrée d'un parking. Le deuxième dispositif de réception 25B est par exemple associé à un service de police. Le troisième dispositif de réception 25 est par exemple associé à un juge d'instruction. Dans cet exemple, le vigile n'est autorisé à consulter que les objets « véhicule » dans les images 37. Le service de police n'est autorisé à consulter que les objets « silhouette » des images 37. Enfin, le juge d'instruction est autorisé à consulter tous les objets, c'est-à-dire les véhicules, les silhouettes et les visages, dans l'image 37.

Préférentiellement, chaque dispositif de réception 25 comprend en outre un écran d'affichage respectif 67.

Le module d'envoi 40 est configuré pour envoyer, à chaque dispositif de réception 25, la clef secrète individuelle Iₛ qui lui est propre. À cet effet, le module d'envoi 40 est configuré pour envoyer cette clef Iₛ à travers un canal sécurisé, par exemple du type TLS, tel qu'un canal HTTPS qui est chiffré et authentifié.

Chaque clef secrète individuelle Iₛ est par exemple stockée dans l'unité de configuration 30. Chaque clef secrète individuelle Iₛ est respective d'un dispositif de réception 25. Dans le cas où le système de communication 10 comprend plusieurs dispositifs de réception 25, les clefs secrètes individuelles Iₛ sont distinctes entre elles.

Chaque clef secrète individuelle Iₛ est propre à permettre un déchiffrement du message chiffré pour faire apparaitre les objets que l'utilisateur du dispositif de réception 25 auquel est envoyée ladite clef Iₛ, est autorisé à consulter.

Dans l'exemple précédemment décrit, le module d'envoi 40 est configuré envoyer une première Iₛ₁, une deuxième Iₛ₂, et une troisième Iₛ₃ clefs secrètes individuelles.

En particulier, le module d'envoi 40 est configuré pour envoyer :
- au premier dispositif de réception 25A, la première clef secrète individuelle Iₛ₁, qui est propre à déchiffrer des objets représentant des véhicules,
- au deuxième dispositif de réception 25B, la deuxième clef secrète individuelle Iₛ₂, qui est propre à déchiffre des objets représentant des silhouettes, et
- au troisième dispositif de réception 25C, une troisième clef secrète individuelle Iₛ₃, qui est propre à déchiffrer tous les objets, i.e. des véhicules, des silhouettes et des visages.

Optionnellement, le module d'acquisition 42 est configuré pour acquérir la table de correspondance. La table de correspondance associe, à chaque dispositif de réception 25, une liste respective d'objet(s) que ledit dispositif de réception 25 est autorisé à consulter par déchiffrement du message chiffré à l'aide de la clef secrète individuelle Iₛ respective. Dans l'exemple précité, la table de correspondance associe :
- au premier dispositif de réception 25A, l'objet « véhicule » ;
- au deuxième dispositif de réception 25B, l'objet « silhouette » ; et
- au troisième dispositif de réception 25C, les objets « véhicule », « silhouette », et « visage ».

Le module de détermination 44 est configuré pour déterminer la clef publique maître Mₚ et la clef secrète maître M_{s.} De manière connue en soi, la clef publique maître Mₚ est configurée pour chiffrer des données qui sont déchiffrables grâce à la clef secrète maître Mₛ.

La clef publique maître Mₚ et la clef secrète maître Mₛ sont préférentiellement distinctes l'une de l'autre. Ainsi, la clef publique maître Mₚ est destinée à être consultable par quiconque souhaite chiffrer des données. La clef secrète maître Mₛ est, quant à elle, gardée secrète, i.e. confidentielle, par l'unité de configuration 30. La clef secrète maître Mₛ n'est préférentiellement communiquée à aucun autre dispositif électronique.

Les clefs publique maître Mₚ et secrète maître Mₛ sont par exemple déterminées aléatoirement.

Le module de calcul 46 est configuré pour calculer, pour chaque dispositif électronique de réception 25, la clef secrète individuelle Iₛ respective, par exemple à partir de la clef secrète maître Mₛ et de la liste d'objet(s) associée au dispositif électronique de réception 25 dans la table de correspondance.

Le module de calcul 46 est par exemple configuré pour appliquer une fonction de génération de clé d'un algorithme de chiffrement par attribut, aussi appelé algorithme ABE (de l'anglais *Attribute-Based Encryption*) connu en soi, dans lequel chaque attribut est un objet. Ainsi, le module de calcul 46 est configuré pour calculer une clef secrète individuelle Iₛ pour chaque dispositif de réception 25 à partir des objets que ledit dispositif de réception 25 est autorisé à consulter dans la table de correspondance.

Le calcul de chaque clef individuelle secrète Iₛ dépend du type d'algorithme ABE utilisé. Préférentiellement, l'algorithme ABE est choisi parmi les algorithme suivants :
- BSW07 décrit dans l'article *Ciphertext-Policy Attribute-Based Encryption de Bethencourt et AI,*
- CPW08 décrit dans l'article *Ciphertext-Policy Attribute-Based Encryption: An Expressive, Efficient, and Provably Secure Realization de Waters et AI,* et
- AC17 décrit dans l'article *FAME: Fast Attribute-based Message Encryption de Agrawal et AI.*

Ainsi, le module de calcul 46 est configuré pour calculer la ou les clefs secrètes individuelles Iₛ, telles que chaque clef secrète individuelle Iₛ permet uniquement de déchiffrer le ou les objets associés au dispositif de réception 25 correspondant dans la table de correspondance.

On entend par « déchiffrer un objet », le fait de déchiffrer des valeurs de pixels chiffrées associées à l'objet, comme cela sera décrit ci-après.

Le module d'obtention 50 est configuré pour obtenir l'image 37 représentant au moins un objet, dans laquelle une ou plusieurs zones 70 sont identifiées comme représentant l'objet ou l'un des objets. Chaque zone 70 comporte certains pixels de l'image 37.

L'expression « certains pixels de l'image » est entendue au sens qu'uniquement une partie des pixels de l'image est comprise dans chaque zone 70.

De manière connue en soi, chaque image est composée d'une pluralité d'éléments, par exemple des pixels. Chaque pixel est défini par sa position spatiale dans l'image et par un n-uplet de valeurs. Chaque valeur est appelée canal ou bande spectrale.

Par exemple, l'image est une image dite RGB, dans laquelle le n-uplet de valeurs est un triplet de valeurs correspondant aux couleurs rouge, vert et bleu. Chaque valeur du triplet de valeurs est par exemple comprise entre 0 et 255. Plus la valeur associée à une couleur est élevée, plus le pixel a une teinte foncée de ladite couleur. En variante, lorsque l'image 37 est en niveau de gris, à chaque pixel est alors associée une unique valeur correspondant à un niveau de gris. Dans ce cas, une valeur maximale (par exemple 255) correspond à un pixel blanc, alors qu'une valeur minimale (par exemple égale à 0) correspond à un pixel noir, ou inversement.

Selon un mode de réalisation, le module d'obtention 50 est configuré pour acquérir, depuis la caméra 15, l'image 37 capturée par ladite caméra 15.

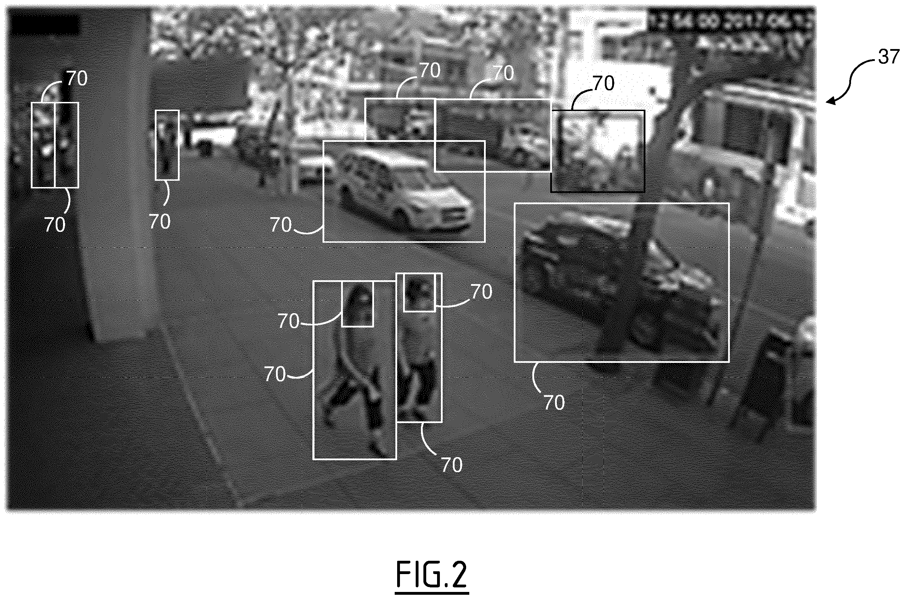

La figure 2 représente une telle image 37. Il est notamment visible sur la figure 2 que cinq véhicules, cinq silhouettes et deux visages sont identifiées.

Le module d'obtention 50 est en outre configuré pour identifier, dans l'image acquise 37, la ou les zones 70 représentant le ou chaque objet, à partir d'un modèle d'identification. Le modèle d'identification comprend par exemple un réseau de neurones, préférentiellement un réseau de neurones entrainé pour détecter la ou les zones 70 correspondant à chaque type d'objet dans l'image 37 et pour classer chaque zone détectée parmi une pluralité de classes correspondant chacune à un objet. Chacune de ces zones étant appelées par la suite zone identifiée 70. De manière connue en soi, le réseau de neurones comprend une pluralité de neurones artificiels organisés en couches. Le réseau de neurones comprend alors une couche d'entrée, une ou plusieurs couches cachées ou intermédiaires, et une couche de sortie. Les neurones de deux couches successives sont connectés entre eux par une liaison comprenant un poids réglable, aussi appelé poids synaptique.

Préférentiellement, le module d'obtention 50 est configuré pour détecter une portion de l'image acquise 37, occupée par chaque objet et pour lui attribuer l'appartenance à une classe spécifique parmi les objets de la table de correspondance.

Préférentiellement, cette détection comprend la définition, par le réseau de neurones entraîné, d'une boite englobante rectangulaire autour de l'objet. Chaque boite englobante forme alors une zone identifiée 70 respective.

Selon une variante non-représentée, le module d'obtention 50 est configuré pour segmenter plus finement l'objet dans l'image acquise 37 en réalisant des masques sur ces objets, i.e. pour attribuer à chaque pixel de l'image une désignation. Ainsi, chaque zone identifié 70 est formée par l'ensemble des pixels de l'image comprenant une même désignation. On comprend alors que la forme des zones identifiées 70 selon cette variante n'est pas nécessairement rectangulaire.

Le module d'application 52 est configuré pour appliquer une obfuscation à la ou chaque zone identifiée 70, pour former une image avec zone(s) obfusquée(s) 75.

On entend par « obfuscation » une modification de valeur(s) d'un ensemble de pixels pour camoufler un objet représenté dans les pixels.

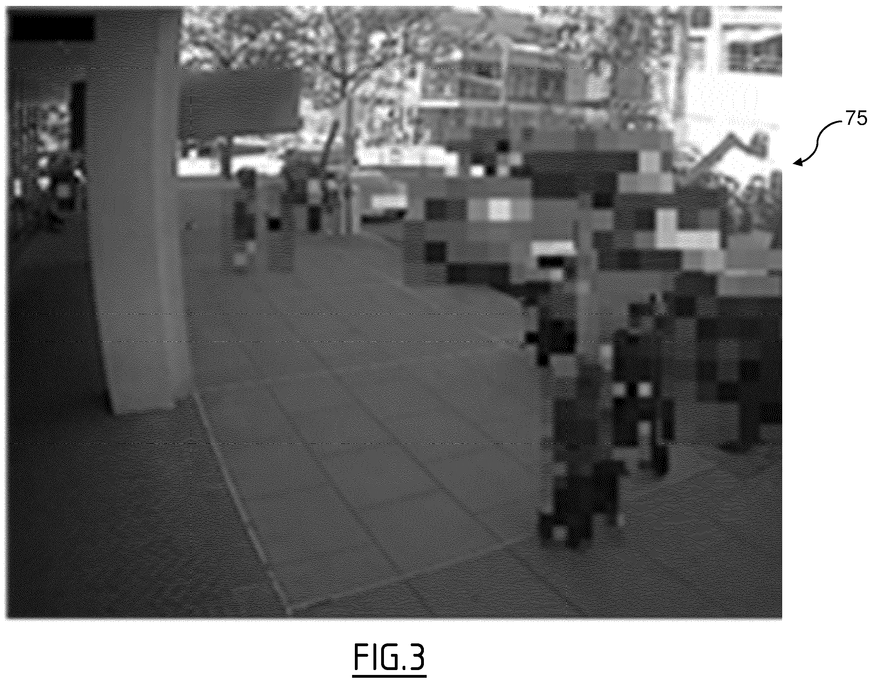

Selon un exemple représenté sur la figure 3, l'obfuscation est un floutage. Le module d'application 52 est par exemple configuré pour diviser chaque zone identifiée 70 en groupe(s) de plusieurs pixels et pour calculer, pour chaque groupe, une valeur moyenne des valeurs des pixels du groupe. Le module d'application 52 est configuré pour ensuite remplacer chaque pixel de chaque groupe, par un pixel ayant la valeur moyenne calculée. Si chaque pixel comprend un triplet de valeurs, ladite valeur moyenne est la moyenne de chaque valeur du triplet. De manière alternative, le floutage comprend l'application d'un filtre de floutage aux zones identifiées 70, tel qu'un filtre gaussien.

En variante, l'obfuscation est un masquage comprenant le remplacement de chaque zone identifiée 70 par une forme dont les pixels ont une couleur prédéfinie, de préférence une forme monochrome, constituée par exemple de pixels noirs.

Le module d'application 52 est configuré pour obtenir une image avec zone(s) obfusquée(s) 75 dans laquelle la ou chaque zone identifiée 70 est modifiée par l'application de l'obfuscation et dans laquelle les parties de l'image ne correspondant pas à une zone identifiée 70 ne sont pas impactées par l'obfuscation.

Le module de génération 54 est configuré pour générer un message chiffré, aussi appelé message sécurisé, comprenant les valeurs des pixels de chaque zone identifiée 70 dans l'image obtenue 37 par le module d'obtention 50. Les valeurs des pixels présentes dans le message chiffré sont chiffrées. Pour cela, le module de génération 54 est par exemple configuré pour stocker, dans un message, les valeurs des pixels correspondant au(x) zone(s) identifiée(s) 70 dans l'image obtenue 37. Le message est par exemple une base de données.

En particulier, le module de génération 54 est configuré pour que le message comprenne, pour chaque zone identifiée 70, plusieurs champs de données. Pour chaque zone identifiée 70, un premier champ de données comporte la position de ladite zone 70 dans l'image 37. Pour chaque zone identifiée 70, un deuxième champ de données comporte les valeurs des pixels de ladite zone 70. Les premier et deuxième champs de données sont par exemple ordonnés de sorte que le message comprenne, pour chaque zone identifiée 70, le premier champ de données relatif à la zone identifiée 70, puis le deuxième champ de données relatif à ladite zone identifiée 70.

Préférentiellement, le message comprend en outre, pour chaque zone identifiée 70, un troisième champ de données comportant une première chaîne de caractères indiquant l'objet représenté dans ladite zone 70. Par exemple, pour chaque zone identifiée 70, le troisième champ de données est localisé, dans le message, entre les premier et deuxième champs de données.

Dans l'exemple précédemment décrit, le message comprend le premier champ de données comportant la position d'une zone 70 dans l'image 37, puis le troisième champ de données comportant une première chaîne de caractères respective « visage », puis le deuxième champ de données comportant les valeurs des pixels ordonnées d'une manière prédéfinie, correspondant à la zone 70 représentant un visage dans l'image 37.

Le module de génération 54 est en outre configuré pour appliquer un algorithme de chiffrement aux valeurs des pixels du message, à partir de la clef publique maître Mₚ, pour former le message chiffré. Les valeurs de pixels chiffrées dans le message chiffré, associées à chaque zone identifiée 70 forme « un chiffré ». Ainsi, on comprend que le message chiffré, ou sécurisé, comprend un chiffré pour chaque zone identifiée 70.

En particulier, le module de génération 54 est par exemple configuré pour appliquer l'algorithme de chiffrement seulement au contenu du deuxième champ de données dans le message. Autrement dit, le contenu du premier champ de données, et optionnellement le contenu du troisième champ de données, ne sont pas chiffrés par l'algorithme de chiffrement. Plus spécifiquement, le module de génération 54 est par exemple configuré pour chiffrer les valeurs des pixels de la manière suivante.

Le module de détermination 54 est configuré pour appliquer un algorithme de chiffrement à chaque ensemble de valeurs de pixels en fonction de la clef publique maître Mₚ et éventuellement d'une politique de chiffrement. L'algorithme de chiffrement dépend de l'algorithme ABE appliqué tel que le BSW07, le CPW08, ou le AC17 décrits précédemment.

La politique de chiffrement associe à chaque zone identifiée 70 une relation logique dépendant du ou des objets représentés dans la zone identifiée 70, et par exemple d'élément(s) de contexte, à partir de la table de correspondance.

Chaque relation logique est typiquement formulable, selon l'algèbre de Boole, par une équation logique comportant au moins un opérande et éventuellement un ou plusieurs opérateurs. Chaque opérande est un objet de la table de correspondance et/ou un élément de contexte. Chaque opérateur est préférentiellement choisi parmi les opérateurs suivants : « ET », et « OU ».

Ainsi, par exemple, en cas de superposition deux objets dans l'image 37, une zone identifié 70 englobe partiellement une autre zone identifiée, la politique comprend une relation logique associée à la zone partiellement englobé du type « premier objet ET deuxième objet » ou du type « premier objet OU deuxième objet » ;

Lorsque la relation logique est du type « premier objet ET deuxième objet », les pixels de ladite zone 70 partiellement englobée sont chiffrés de sorte que seul un dispositif de réception 25 ayant une clef secrète individuelle correspondant au premier objet et au deuxième objet puisse déchiffrer ces pixels.

Lorsque la relation logique est du type « premier objet OU deuxième objet », les pixels de ladite zone partiellement englobée sont chiffrés de sorte que seul un dispositif de réception 25 ayant une clef secrète individuelle correspondant au premier objet ou au deuxième objet puisse déchiffrer ces pixels.

On comprend que le troisième champ de données comprend la relation logique associée à la zone identifiée 70 correspondante, dans la politique de chiffrement.

Le module d'émission 56 est configuré pour émettre, à destination de chaque dispositif de réception 25, l'image avec zone(s) obfusquée(s) 75 et le message chiffré. Préférentiellement, le message chiffré est compris dans des métadonnées de l'image avec zone(s) obfusquée(s) 75 émise.

On comprend alors qu'un tiers interceptant l'image avec zone(s) obfusquée(s) 75 et le message chiffré émis par le module d'émission 56, n'est pas en mesure de consulter les objets des zones identifiées 70 dans l'image acquise 37, i.e. les objets dont les valeurs des pixels ont été chiffrées dans le message chiffré.

En outre, l'image avec zone(s) obfusquée(s) 75 et le message chiffré sont par exemple transmis sur un canal non-sécurisé, sans qu'un risque pour la confidentialité des données personnelles ne soit encouru.

Concernant chaque dispositif de réception 25, son module de réception 60 est configuré pour recevoir, depuis le dispositif d'émission 20, et en particulier depuis le module d'émission 56 de l'unité de chiffrement 35, l'image avec zone(s) obfusquée(s) 75 et le message chiffré. Le module de réception 60 est en outre configuré pour recevoir, depuis le dispositif d'émission 25, et plus particulièrement depuis l'unité de configuration 30, la clef secrète individuelle Iₛ qui lui est propre.

Le module de déchiffrement 62 est configuré pour appliquer un algorithme de déchiffrement aux valeurs chiffrées de pixels du message chiffré à partir de la clef secrète individuelle Iₛ reçue, pour obtenir un message partiellement déchiffré.

En particulier, le module de déchiffrement 62 est configuré pour utiliser un algorithme de déchiffrement utilisant la clef secrète individuelle Iₛ. Par exemple le module de déchiffrement 62 est configuré pour utiliser en outre la clef maître publique Mₚ. L'algorithme de déchiffrement utilisé dépend de l'algorithme ABE qui a été utilisé pour générer la clef secrète individuelle Iₛ. Cet algorithme est par exemple connu de chaque module de réception 25, par la réception de la clef secrète individuelle Iₛ.

Selon un exemple, le module de déchiffrement 62 est configuré pour appliquer l'algorithme de déchiffrement à toutes les valeurs des pixels du message chiffré, i.e. au contenu du ou des deuxièmes champs de données dans le message. Dans ce cas, le module de déchiffrement 62 est configuré pour obtenir, pour la ou les zones 70 représentant un ou des objets que le dispositif de réception 25 associé est autorisé à consulter, les valeurs des pixels de la zone identifiée 70 correspondant à celles de l'image acquise 37 par le dispositif d'émission 20.

Pour les zones 70 correspondant à des objets que le module de réception 25 n'est pas autorisé à consulter, l'algorithme de déchiffrement échoue à déchiffrer les valeurs de pixels et renvoie un message d'erreur.

En variante, pour ces zones 70, les valeurs des pixels obtenues suite à l'application de l'algorithme de déchiffrement sont distinctes de celles de ces zones 70 dans l'image acquise 37. Autrement dit, les valeurs des pixels correspondant à des zones 70 pour lesquelles le dispositif de réception 37 n'est pas autorisé à consulter l'objet représenté, forment un signal bruité, par exemple un contenu inintelligible dans le message partiellement déchiffré.

On comprend alors que l'expression « message partiellement déchiffré » fait référence au fait que l'application de l'algorithme de déchiffrement ne permet pas nécessairement de déchiffrer tout le message chiffré mais seulement les parties correspondant au(x) zone(s) représentant le ou les objets que le dispositif de réception 25 est autorisé à consulter.

Le module de reconstitution 64 est configuré reconstituer une image partiellement reconstituée 77 par remplacement dans l'image avec zone(s) obfusquée(s) 75, des valeurs des pixels des zones par les valeurs des pixels des zones correspondantes dans le message partiellement déchiffré.

L'image partiellement reconstituée 77 est telle que les zones correspondant à des objets que le dispositif de réception 25 est autorisé à consulter sont les mêmes que celles 70 de l'image 37 acquise par le dispositif d'émission 20 depuis la caméra 15. Les autres zones 70 ne sont pas déchiffrées et comprennent donc des pixels de valeur(s) distincte(s) de celles dans l'image acquise 37 par le dispositif d'émission 20. Par exemple ces valeurs forment un signal bruité inintelligible.

Un exemple d'image partiellement reconstituée 77 obtenue par le premier dispositif de réception 25A est illustré sur la figure 3. Comme représenté sur la figure 3, parmi les objets « véhicule », « silhouette » et « visage » seuls les objets « véhicule » sont visibles.

Préférentiellement, le module de reconstitution 64 est en outre configuré pour transmettre l'image partiellement reconstituée 77 à l'écran d'affichage 67 dudit dispositif de réception 25, pour son affichage à destination de l'utilisateur dudit dispositif de réception 25.

Selon une variante, le module de déchiffrement 62 est configuré pour, si le message chiffré reçu par le module de réception 60 comprend pour chaque zone 70, le troisième champ de données, appliquer l'algorithme de déchiffrement uniquement aux valeurs des pixels associées au troisième champ de données comportant une première chaîne de caractères respective indiquant un objet que ledit dispositif de réception 25 est autorisé à consulter, dans le message chiffré. Selon cette variante, le module de reconstitution 64 est configuré pour remplacer, dans l'image avec zone(s) obfusquée(s) 75, uniquement les valeurs des pixels de la ou des zones 70 comprenant des valeurs des pixels auxquelles l'algorithme de déchiffrement a été appliqué.

Dans l'exemple de la figure 1, l'unité de configuration 30 comprend une première unité de traitement d'informations formée par exemple d'une première mémoire 80 et d'un premier processeur 82 associé à la première mémoire 80. Le module d'envoi 40 ; et optionnellement le module d'acquisition 42, le module de détermination 44, et le module de calcul 46 sont réalisés chacun sous forme d'un logiciel, ou d'une brique logicielle, exécutables par le premier processeur 82. La première mémoire 80 est alors apte à stocker un logiciel d'envoi et optionnellement un logiciel d'acquisition, un logiciel de détermination et un logiciel de calcul. Le premier processeur 82 est alors apte à exécuter chacun de ces logiciels.

Toujours dans l'exemple de la figure 1, l'unité de chiffrement 35 comprend une deuxième unité de traitement d'informations formée par exemple d'une deuxième mémoire 85 et d'un deuxième processeur 87 associé à la deuxième mémoire 85. Le module d'obtention 50, le module d'application 52, le module de génération 54, et le module d'émission 56 sont réalisés chacun sous forme d'un logiciel, ou d'une brique logicielle, exécutables par le deuxième processeur 87. La deuxième mémoire 85 est alors apte à stocker un logiciel d'obtention, un logiciel d'application, un logiciel de génération et un logiciel d'émission. Le deuxième processeur 87 est alors apte à exécuter chacun de ces logiciels.

Toujours dans l'exemple de la figure 1, chaque dispositif de réception 25 comprend une troisième unité de traitement d'informations formée par exemple d'une troisième mémoire 90 et d'un troisième processeur 92 associé à la troisième mémoire 90. Le module de réception 60, le module de déchiffrement 62, et le module de reconstitution 64 sont réalisés chacun sous forme d'un logiciel, ou d'une brique logicielle, exécutables par le troisième processeur 92. La troisième mémoire 90 est alors apte à stocker un logiciel de réception, un logiciel de déchiffrement, et un logiciel de reconstitution. Le troisième processeur 92 est alors apte à exécuter chacun de ces logiciels.

En variante non représentée, au moins un parmi le module d'envoi 40, le module d'obtention 50, le module d'application 52, le module de génération 54, le module de d'émission 56, le module de réception 60, le module de déchiffrement 62, le module de reconstitution 64, et optionnellement le module d'acquisition 42, le module de détermination 44, le module de calcul 46, est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque l'unité de configuration 30, l'unité de chiffrement 35 et chaque dispositif de réception 25 sont réalisés sous forme d'un ou plusieurs logiciels, c'est-à-dire sous forme d'un programme d'ordinateur, ils sont en outre aptes à être enregistrés sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Le fonctionnement du système de communication 10 va maintenant être décrit.

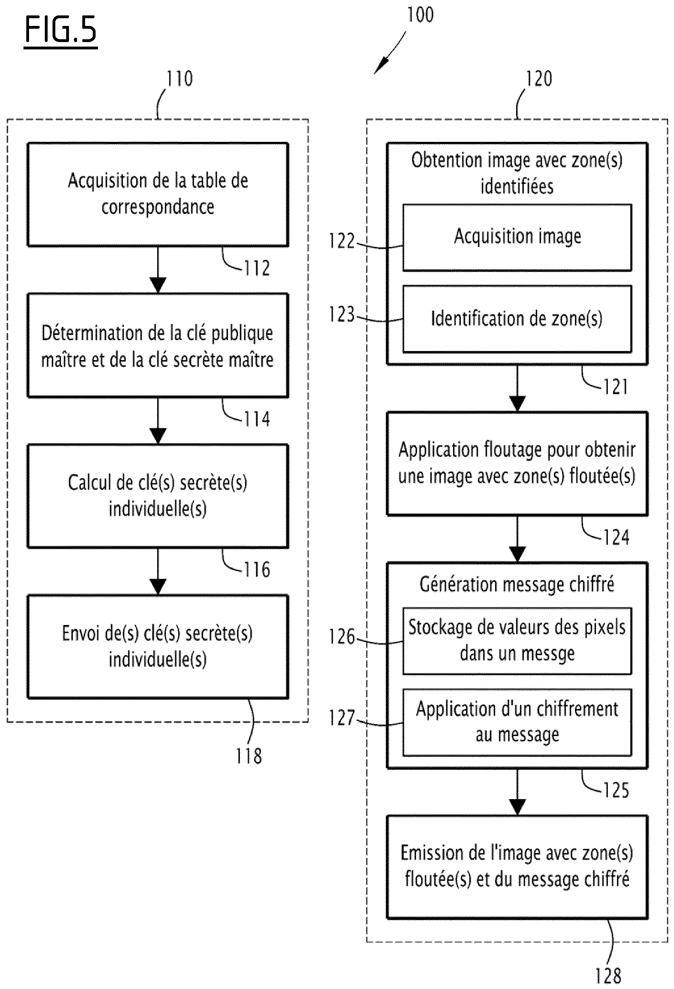

Premièrement, le fonctionnement du dispositif d'émission 20 va être décrit en référence à la figure 5 représentant un organigramme d'un procédé d'émission 100 selon l'invention.

Le procédé d'émission 100 comprend une phase de configuration 110 et une phase de chiffrement 120.

Préférentiellement, la phase de configuration 110 est mise en œuvre préalablement à la phase de chiffrement 120.

Initialement, un opérateur du dispositif d'émission 20 créé la table de correspondance et l'envoie à destination de l'unité de configuration 30.

Optionnellement, la phase de configuration 110 comprend une étape d'acquisition 112 lors de laquelle le module d'acquisition 42 acquiert la table de correspondance depuis l'opérateur.

Optionnellement, la phase de configuration 110 comprend une étape de détermination 114 lors de laquelle le module de détermination 44 détermine la clef publique maître Mₚ et la clef secrète maître Mₛ, par exemple aléatoirement.

Optionnellement encore, la phase de configuration 110 comprend ensuite une étape 116 de calcul des clefs secrètes individuelles Iₛ propres à chaque dispositif de réception 25, à partir de la table de correspondance indiquant, pour chaque dispositif de réception 25, le ou les objets qu'il est autorisé à consulter. Préférentiellement, chaque clef secrète individuelle est calculée à partir de la clef secrète maître Mₛ, des objets de la table de correspondance, et d'un algorithme ABE tel que décrit précédemment

La phase de configuration 110 comprend en outre une étape 118 d'envoi, à chaque dispositif de réception 25, de la clef secrète individuelle Iₛ qui lui est propre. Pour cela, le module d'envoi 70 utilise préférentiellement un canal sécurisé du type TLS, tel qu'un canal HTTPS qui est chiffré et authentifié.

En variante, chaque clef secrète individuelle Iₛ est déjà stockée dans l'unité de configuration 30. Selon cette variante, la phase de configuration 110 comprend seulement l'étape d'envoi 118.

La phase de chiffrement 120 comprend une étape 121 d'obtention de l'image 37 comprenant au moins une zone 70 identifiée comme représentant respectivement un objet.

L'étape d'obtention 121 comprend préférentiellement une sous-étape 122 d'acquisition, depuis la caméra 15, de l'image 37.

Puis, l'étape d'obtention 121 comprend préférentiellement une sous-étape 123 d'identification, dans l'image acquise 37, des zones 70 représentant chaque objet.

Par exemple, lors de la sous-étape d'identification 123, le module d'obtention 50 applique, à l'image acquise 37, le modèle d'identification incluant le réseau de neurones décrit précédemment, pour identifier chaque zone 70.

La phase de chiffrement 120 comprend en outre une étape d'application 124, lors de laquelle le module d'application 52 applique, à chaque zone identifiée 70, l'obfuscation pour former l'image avec zone(s) obfusquée(s) 75. L'image avec zone(s) obfusquée(s) 75 comprend, dans chaque zone identifiée 70, des pixels dont une valeur est distincte de la valeur des mêmes pixels dans l'image acquise 37.

La phase de chiffrement 120 comprend en outre une étape 125 de génération du message chiffré.

L'étape de génération 125 comprend préférentiellement une sous-étape de stockage 126 et une sous-étape d'application d'un chiffrement 127.

Lors de la sous-étape de stockage 126, le module de génération 54 stocke, pour chaque zone identifiée 70, les valeurs des pixels de l'image acquise 37, dans le message. Le message est préférentiellement une base de données.

Avantageusement, le message comprend alors, pour chaque zone identifiée 70 dans l'image acquise 37 : le premier champ de données comportant la position de ladite zone 70 dans l'image acquise 37 et le deuxième champ de données comportant les valeurs des pixels dans l'image acquise 37. Pour chaque zone identifiée 70, le premier champ de données est préférentiellement disposé, dans le message, avant le deuxième champ de données.

Lors de la sous-étape d'application du chiffrement 127, le module de génération 54 applique aux valeurs des pixels du message, le chiffrement à partir de la clef publique maître Mₚ et de la politique de chiffrement comme indiqué précédemment.

A l'issue de la sous-étape d'application du chiffrement 127, toutes les valeurs des pixels du message sont chiffrées, formant ainsi le message chiffré.

La phase de chiffrement 120 comprend en outre une étape d'émission 128 lors de laquelle le module d'émission 56 émet, à destination de chaque dispositif de réception 25, l'image avec zone(s) obfusquée(s) 75 et le message chiffré.

Par exemple, le message chiffré est compris dans les métadonnées de l'image avec zone(s) obfusquée(s) 75.

L'étape d'émission 128 est par exemple effectuée via un canal de communication standard et non-sécurisé.

Par exemple, toutes les étapes 121, 124, 125, 128 de la phase de chiffrement 120 sont réitérées pour une pluralité d'images 37 formant un flux vidéo. Ainsi, pour chaque image 37 du flux vidéo, l'unité de chiffrement 35 met en œuvre successivement chacune des étapes d'obtention 121, d'application 124, de génération 125 et d'émission 128.

Selon un autre exemple, pour chaque image 37 formant le flux vidéo, l'unité de chiffrement met en œuvre successivement uniquement les étapes d'obtention 121, d'application 124 et de génération 125. La phase de chiffrement 120 comprend ensuite une unique étape d'émission 128 pour l'intégralité, i.e. la totalité, des images avec zone(s) obfusquée(s) 75 et des messages chiffrés associés.

Les phases de configuration 110 et de chiffrement 120 sont par exemple mises en œuvre successivement comme décrit précédemment.

Selon une alternative, les phases de configuration 110 et de chiffrement 120 sont mises en œuvre parallèlement. Dans ce cas, il est tout de même préférable que l'étape de détermination 114 soit mise en œuvre préalablement à l'étape de génération 125 afin que lors de la sous-étape d'application 127, la clé publique maître Mₚ ait déjà été déterminée.

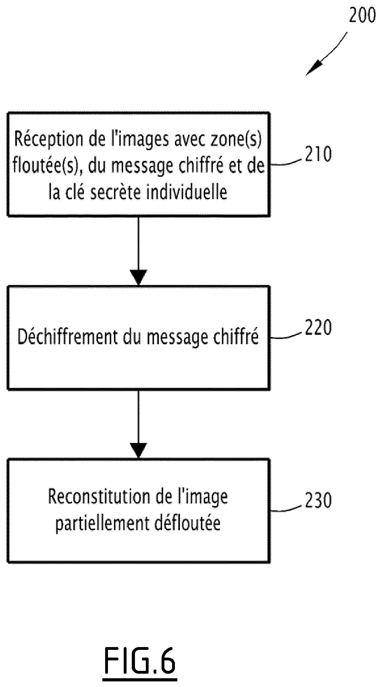

Deuxièmement, le fonctionnement de chaque dispositif de réception 25 va être décrit en référence à la figure 6 décrivant un procédé de réception 200, selon l'invention, mis en œuvre par chaque dispositif de réception 25.

Le procédé de réception 200 comprend une étape de réception 210. Lors de l'étape de réception 210, le module de réception 60 reçoit, depuis le dispositif d'émission 20, la clef secrète individuelle Iₛ qui lui est propre, l'image avec zone(s) obfusquée(s) 75 et le message chiffré.

La réception 210 de la clef secrète individuelle Iₛ et la réception de l'image avec zone(s) obfusquée(s) 75 ne sont préférentiellement pas effectuées aux mêmes instants.

Avantageusement, le module de réception 60 reçoit la clef secrète individuelle Iₛ qui lui est propre depuis le module d'envoi 40, via le canal sécurisé.

Par exemple, le module de réception 60 reçoit l'image avec zone(s) obfusquée(s) 75 et le message chiffré depuis le module d'émission 56, via le canal non-sécurisé.

Le clef secrète individuelle Iₛ est reçue antérieurement ou postérieurement à l'image avec zone(s) obfusquée(s) 75 et au message chiffré.

Préférentiellement, le message chiffré est une base de données.

Puis, le procédé de réception 200 comprend une étape de déchiffrement 220 lors de laquelle le module de déchiffrement 62 applique l'algorithme de déchiffrement au message chiffré, à partir de la clef secrète individuelle Iₛ, reçue pour obtenir le message partiellement déchiffré.

Par exemple, le module de déchiffrement 62 applique l'algorithme de déchiffrement à toutes les valeurs des pixels chiffrées du message chiffré.

Lors de l'étape de déchiffrement 220, l'application de l'algorithme de déchiffrement permet d'obtenir, pour la ou les zones identifiées 70 représentant un objet que le dispositif de réception 25 est autorisé à consulter, les valeurs des pixels desdites zones 70 dans l'image acquise 37. Pour la ou les autres zones le cas échéant, l'application de l'algorithme de déchiffrement fournit des valeurs des pixels distinctes de celles dans l'image acquise 37.

Autrement dit, l'application de l'algorithme de déchiffrement permet de déchiffrer seulement les valeurs des pixels de la ou des zones 70 représentant le ou les objets que le dispositif réception 25 est autorisé à consulter. Pour les valeurs des pixels de la ou des autres zones 70, l'application de l'algorithme de déchiffrement fournit des valeurs des pixels ne représentant aucun contenu intelligible.

Le procédé de déchiffrement 200 comprend ensuite une étape de reconstitution 230 lors de laquelle le module de reconstitution 64 reconstitue l'image partiellement reconstituée 77. Pour cela, le module de reconstitution 64 remplace, dans l'image avec zone(s) obfusquée(s) 75, les valeurs des pixels de la ou des zones obfusquées par les valeurs des pixels correspondantes du message partiellement déchiffré, pour former l'image partiellement reconstituée 77.

Préférentiellement, lors de l'étape de remplacement 230, le module de reconstitution 64 envoie l'image partiellement reconstituée 77 à l'écran d'affichage 67 du dispositif de réception 25.

Ainsi, l'utilisateur du dispositif de réception 25 consultant l'image partiellement reconstituée 77 a accès seulement aux objets de l'image acquise 37 qu'il est autorisé à consulter, le ou les autres objets n'étant pas représentés dans l'image partiellement reconstituée 77.

Le procédé de réception 200 est par exemple itéré pour une pluralité d'images avec zone(s) obfusquée(s) 77 et messages chiffrés associés. La clef secrète individuelle Iₛ n'est préférentiellement reçue qu'une seule fois.

Selon une première variante, le message chiffré comprend en outre, pour chaque zone identifiée 70, le troisième champ de données comportant la première chaîne de caractères indiquant l'objet représenté dans ladite zone 70. Par exemple, si une zone 70 représente un visage, le message chiffré comprend le premier champ de données indiquant la position de ladite zone dans l'image acquise, le troisième champ de données comportant la première chaîne de caractères « visage » et le deuxième champ de données comportant les valeurs des pixels de ladite zone 70 qui ont été chiffrées.

Selon cette première variante, lors de l'étape de déchiffrement 220, le module de déchiffrement 62 applique l'algorithme de déchiffrement uniquement aux valeurs des pixels associées au troisième champ de données comportant une chaîne de caractères correspondant à un objet que le dispositif de réception 25 est autorisé à consulter.

Toujours selon cette première variante, lors de l'étape de remplacement 230, le module de reconstitution 64 remplace, dans l'image avec zone(s) obfusquée(s) 75, seulement les pixels de(s) zone(s) 70 pour laquelle ou lesquelles l'algorithme de déchiffrement a été appliqué par le module de déchiffrement 62. Selon cette variante, la ou les zones de l'image partiellement reconstituée 77 distinctes de la ou des zones représentant un objet que le dispositif de réception 25 est autorisé à consulter, sont identiques à celles de l'image avec zone(s) obfusquée(s) 75.

Selon une deuxième variante, le module de réception 60 reçoit plusieurs images avec zone(s) obfusquée(s) 75 et les messages chiffrés correspondant avant de mettre en œuvre les étapes de déchiffrement 220 et de reconstitution 230. Selon cette deuxième variante, la clef secrète individuelle Iₛ est par exemple reçue antérieurement et/ou postérieurement à la réception de toutes les images avec zone(s) obfusquée(s) 77 et messages chiffrés correspondant.

Selon une troisième variante non-représentée, le système de communication 10 comprend plusieurs caméras 15. Selon cette troisième variante, chaque clef individuelle secrète I_{S} est propre à déchiffrer seulement des valeurs des pixels correspondant à une zone 70 représentant un ou plusieurs objets et venant d'une ou plusieurs caméras 15 choisies.

Par exemple, le système de communication 10 comprend une première caméra 15 capturant des images devant une première entrée de parking, et une deuxième caméra 15' capturant des images devant une deuxième entrée de parking. Le système de communication 10 comprend un premier dispositif de réception 25A associé à un premier vigile surveillant la première entrée et un premier dispositif de réception 25A' associé à un deuxième vigile surveillant la deuxième entrée.

Dans cet exemple, le premier dispositif de réception 25A associé au premier vigile est autorisé à consulter uniquement les objets « véhicule » capturés par la première caméra 15, alors que le premier dispositif de réception 25A' associé au deuxième vigile est autorisé à consulter uniquement les objets « véhicule » capturés par la deuxième caméra 15'.

Selon le complément facultatif dans lequel l'unité de configuration 30 comprend le module d'acquisition 42, le module de détermination 44 et le module de calcul 46, la table de correspondance associe alors, à chaque dispositif de réception 25 la liste d'objet(s) respectif(s) et pour chaque objet, la ou les caméras 15 dont proviennent les images 37 représentant cet objet. Ainsi, dans cet exemple, la table de correspondance associe :
- au premier dispositif de réception 25A associé au premier vigile, l'objet « véhicule » provenant de la première caméra 15, 15',
- au premier dispositif de réception 25A' associé au deuxième vigile, l'objet « véhicule » provenant de la deuxième caméra 15, 15',
- au deuxième dispositif de réception 25B associé au service de police, l'objet « silhouette » provenant de chaque caméra 15, 15', et
- au troisième dispositif de réception 25C associé au juge d'instruction, les objets « véhicule », « silhouette » et « visage » provenant de chaque caméra 15, 15'.

Le module de calcul 46 est alors configuré pour calculer chaque clef secrète individuelle Iₛ en fonction de la liste d'objet(s) et en outre de la caméra 15, 15' dont provient l'image 37.

Le module d'obtention 50 est configuré pour obtenir au moins une image respective 37 depuis chaque caméra 15, 15', chaque image 37 ayant une ou plusieurs zones identifiées 70.

Le module d'application 52 est alors configuré pour appliquer le masquage à chaque zone identifiée 70 de chaque image 37.

Le module de génération 54 est configuré pour générer un message chiffré respectif pour chaque image 37.

Alternativement, le module de génération 54 est configuré pour générer un unique message chiffré pour un ensemble comprenant une image 37 provenant de chaque caméra 15, 15'. Chaque relation logique de la politique de chiffrement combine alors le ou les objets représentés dans la zone identifiée 70 et un élément de contexte qui est la caméra 15, 15' dont provient l'image 37 associée à la zone identifiée 70.

Le module d'émission 56 est configuré pour émettre, à destination de chaque dispositif de réception 25, chaque image avec zone(s) obfusquée(s) 75 et le ou chaque message chiffré.

Selon cette troisième variante, le module de déchiffrement 62 est configuré pour, si le module de réception 60 a reçu un message chiffré pour chaque image avec zone(s) obfusquée(s) 75, alors appliquer l'algorithme de déchiffrement à chaque message chiffré correspondant à une caméra 15, 15' pour laquelle le dispositif de réception 25 est autorisé à consulter au moins un objet. Le module de déchiffrement 62 est configuré pour, si le module de réception 60 n'a reçu qu'un message chiffré pour l'ensemble des images avec zone(s) obfusquée(s) reçues 75, alors appliquer l'algorithme de déchiffrement uniquement aux valeurs des pixels pour laquelle la clef secrète individuelle Iₛ est associée à au moins un objet et/ou élément(s) de contexte vérifiant la relation logique du troisième champ de données.

Selon cette variante, le module de reconstitution 64 est configuré pour, si un message chiffré par image avec zone(s) obfusquée(s) 75 est reçu, remplacer alors les valeurs des pixels de chaque zone obfusquée de chaque image reçue 75 par les valeurs des pixels du message partiellement déchiffré associé.

Le module de reconstitution 64 est configuré pour, si un message chiffré est reçu pour l'ensemble des images avec zone(s) obfusquée(s) 75, remplacer alors dans chaque image avec zone(s) obfusquée(s) 75, les valeurs des pixels de chaque zone obfusquée par les valeurs des pixels déchiffrées du message partiellement déchiffré.

Selon cette troisième variante, le procédé d'émission est identique au procédé d'émission 100 décrit précédemment, aux différences près suivantes.

Lors de l'étape facultative de calcul 116, le module de calcul 46 calcule la clef secrète individuelle Iₛ associée à chaque dispositif de réception 25 en prenant également en compte la ou les caméras 15 pour lesquelles le dispositif de réception 25 est autorisé à consulter les objets.

Lors de l'étape d'obtention 121, le module d'obtention 50 obtient une image respective 37 avec une ou plusieurs zones identifiées 70, pour chaque caméra 15, 15'. Préférentiellement, l'étape d'obtention 121 comprend les sous-étapes d'acquisition 122 et d'identification 123 qui sont mises en œuvre pour chaque image 37.

L'étape d'application 124 est appliquée à chaque image 37 pour former, pour ladite image 37, une image avec zone(s) obfusquée(s) 75 respective.

Lors de l'étape de génération 125, le module de génération 54 génère un message chiffré respectif par image 37 tel que décrit précédemment, ou un message chiffré pour l'ensemble des images 37. Dans ce dernier cas, le troisième champ de données du message chiffré comprend alors la relation logique associée à au(x) objet(s) représenté(s) dans la zone identifiée 70 et au(x) élément(s) de contexte de la politique de chiffrement.

Lors de l'étape d'émission 128, le module d'émission 56 émet, à destination de chaque dispositif de réception 25, les images avec zone(s) obfusquée(s) 75 et le ou les messages chiffrés.

Le procédé de réception 200 selon cette variante de réalisation est identique au procédé de réception 200 décrit précédemment aux différences près suivantes.

Lors de l'étape de réception 210, le module de réception 60 reçoit chaque image avec zone(s) obfusquée(s) 75 et le ou les messages chiffrés.

L'étape de déchiffrement 220 est mise en œuvre pour le ou chaque message chiffré pour obtenir un ou plusieurs messages partiellement déchiffrés.

Si un message chiffré pour chaque image avec zone(s) obfusquée(s) 75 a été reçu, l'étape de reconstitution 230 est itérée pour chaque message partiellement déchiffré, i.e. pour chaque image avec zone(s) obfusquée(s) 75.

Si un message chiffré a été reçu pour l'ensemble des images avec zone(s) obfusquée(s) 75, lors de l'étape de reconstitution 230, le module de reconstitution 64 remplace, pour chaque image avec zone(s) obfusquée(s) 75, les valeurs des pixels de chaque zone obfusquée par les valeurs des pixels déchiffrées du message partiellement déchiffré.

Les première et deuxième variantes précédemment décrites sont combinables avec la troisième variante décrite ci-dessus.

Avec le procédé d'émission 100 selon l'invention, il est possible d'émettre une image qui protège les données personnelles, tout en étant partiellement déchiffrable pour un utilisateur autorisé à consulter une partie de son contenu.

Avec le procédé de réception 200 selon l'invention, il est possible de ne déchiffrer qu'une partie d'une image pour laquelle seulement certains objets sont autorisés à être consultés.

Ainsi, les procédés d'émission 100 et de réception 200 selon l'invention, permettent d'améliorer la confidentialité des données personnelles.

## Revendications

1. Procédé d'émission (100), depuis un dispositif électronique d'émission (20) et à destination de plusieurs dispositifs électroniques de réception (25), d'une image (37) représentant plusieurs objets,
le procédé d'émission (100) étant mis en œuvre par le dispositif électronique d'émission (20) et comprenant une phase de configuration (110) comportant l'étape suivante :
- acquisition (112) d'une table de correspondance, la table de correspondance associant à chaque dispositif électronique de réception (25), une liste respective d'objet(s) que ledit dispositif électronique de réception (25) est autorisé à consulter par déchiffrement du message chiffré, à partir de ladite clef secrète individuelle (Iₛ),
- détermination (114) d'une clef publique maître (Mₚ) et d'une clef secrète maître (Mₛ),
- calcul (116), pour chaque dispositif électronique de réception (25), de la clef secrète individuelle (Iₛ) respective à partir de la clef secrète maître (Mₛ) et de la liste d'objet(s) associée audit dispositif électronique de réception (25) dans la table de correspondance,
- envoi (118) à chaque dispositif électronique de réception (25) d'une clef secrète individuelle (Iₛ) respective,
le procédé (100) comprenant en outre une phase de chiffrement (120) comportant les étapes suivantes :
- obtention (121) de l'image (37) représentant les objets, dans laquelle une ou des zones (70) comportant certains pixels de l'image sont identifiées, chaque zone identifiée (70) représentant l'un des objets,
- application (124) d'une obfuscation à la ou chaque zone (70) de l'image (37), pour former une image avec zone(s) obfusquée(s) (75),
- génération (125) d'un message chiffré comprenant des valeurs des pixels des zones dans l'image obtenue, dans lequel lesdites valeurs sont chiffrées, les valeurs des pixels étant chiffrées à partir de la clef publique maître (Mₚ),
l'étape de génération (125) comprend les sous-étapes suivantes :
∘ stockage (126), dans un message, des valeurs des pixels correspondant au(x) zone(s) identifiée(s) dans l'image,
∘ application (127) d'un algorithme de chiffrement aux valeurs des pixels du message à partir de la clef publique maître (Mₚ), et d'une politique de chiffrement, pour former le message chiffré, la politique de chiffrement associant à chaque zone identifiée (70) une relation logique dépendant du ou des objets représentés dans ladite zone,
- émission (128), à destination de chaque dispositif électronique de réception (25), de l'image avec zone(s) obfusquée(s) (75) et du message chiffré en vue de son déchiffrement au moins partiel, par chaque dispositif électronique de réception (25) pour reconstituer une image partiellement reconstituée (77) associée au dispositif électronique de réception (25),
dans lequel chaque clef secrète individuelle (Iₛ) est calculée à partir de la table de correspondance par application d'une fonction de génération de clé d'un algorithme de chiffrement par attribut.

2. Procédé (100) selon la revendication 1, dans lequel l'étape d'obtention (121) comprend les sous-étapes suivantes :
- acquisition (122) de l'image (37), et
- identification (123) dans l'image acquise de(s) zone(s) (70) représentant chaque objet à partir d'un modèle d'identification,
l'étape d'identification (123) étant préférentiellement mise en œuvre par un modèle d'identification comprenant plus préférentiellement un réseau de neurones.

3. Procédé (100) selon la revendication 1 ou 2, dans lequel l'algorithme de chiffrement est choisi parmi le groupe constitué de :
- l'algorithme BSW07,
- l'algorithme CPW08, et
- l'algorithme AC17

4. Procédé (100) selon l'une quelconque des revendications précédentes, dans lequel l'image obtenue (37) provient d'une caméra (15, 15') choisie dans une liste prédéfinie de caméras (15, 15'), la table de correspondance associant, à chaque dispositif électronique de réception (25), pour chaque objet, une ou plusieurs caméras (15, 15') propres à capter des images pour lesquelles ledit dispositif électronique de réception (25) est autorisé à consulter ledit objet,
la ou chaque clef secrète individuelle (Iₛ) étant en outre fonction de la ou des caméras (15, 15') associées au dispositif électronique de réception (25) correspondant dans la table de correspondance.

5. Produit programme d'ordinateur d'émission comprenant des instructions logicielles, qui lorsqu'elles sont exécutées, mettent en œuvre un procédé d'émission (100) selon l'une quelconque des revendications précédentes.

6. Dispositif électronique d'émission (20), à destination de plusieurs dispositifs électroniques de réception (25), d'une image (37) représentant plusieurs objets parmi une liste prédéfinie d'objets, le dispositif électronique d'émission (25) comprenant une unité de configuration (30) comprenant :
- un module d'acquisition (42) configuré pour acquérir une table de correspondance, la table de correspondance associant à chaque dispositif électronique de réception (25), une liste respective d'objet(s) que ledit dispositif électronique de réception (25) est autorisé à consulter par déchiffrement du message chiffré, à partir de ladite clef secrète individuelle (Iₛ),
- un module de détermination (44) configuré pour déterminer une clef publique maître (Mₚ) et une clef secrète maître (Mₛ), et
- un module de calcul (46) configuré pour calculer la clef secrète individuelle (Iₛ) respective à partir de la clef secrète maître (Mₛ) et de la liste d'objet(s) associée audit dispositif électronique de réception (25) dans la table de correspondance,
- un module d'envoi (40) configuré pour envoyer au ou à chaque dispositif électronique de réception (25) une clef secrète individuelle (Iₛ) respective,
le dispositif électronique d'émission (20) comprenant en outre une unité de chiffrement (35) comportant :
- un module d'obtention (50) configuré pour obtenir l'image (37) représentant les objets, dans laquelle une ou des zones (70) comportant certains pixels de l'image sont identifiées, chaque zone (70) identifiée représentant l'un des objets,
- un module d'application (52) configuré pour appliquer un masquage à la ou chaque zone (70) de l'image (37), pour former une image avec zone(s) obfusquée(s),
- un module de génération (54) configuré pour générer un message chiffré comprenant des valeurs des pixels des zones (70) dans l'image obtenue (37), dans lequel lesdites valeurs sont chiffrées, les valeurs des pixels étant chiffrées à partir d'une clef publique maître (Mₚ),
le module de génération (54) étant configuré pour :
∘ stocker, dans un message, des valeurs des pixels correspondant au(x) zone(s) identifiée(s) dans l'image,
∘ appliquer un algorithme de chiffrement aux valeurs des pixels du message à partir de la clef publique maître (Mₚ), I et d'une politique de chiffrement, pour former le message chiffré, la politique de chiffrement associant à chaque zone identifiée (70) une relation logique dépendant du ou des objets représentés dans ladite zone,
- un module d'émission (56) configuré pour émettre, à destination de chaque dispositif électronique de réception (25), l'image avec zone(s) obfusquée(s) (75) et le message chiffré en vue de son déchiffrement au moins partiel, par chaque dispositif électronique de réception (25) pour reconstituer une image partiellement reconstituée (77) associée au dispositif électronique de réception (25) respectif,
dans lequel chaque clef secrète individuelle (Iₛ) est calculée à partir de la table de correspondance par application d'une fonction de génération de clé d'un algorithme de chiffrement par attribut.

7. Procédé de réception (200), par un dispositif électronique de réception (25) et depuis un dispositif électronique d'émission (20) selon la revendication 6, d'une image (75) avec au moins une zone obfusquée propre à représenter un objet parmi une liste prédéfinie d'objet(s),
le procédé (200) étant mis en œuvre par le dispositif électronique de réception (25) et comprenant les étapes suivantes :
- réception (210) de l'image avec zone(s) obfusquée(s) (75), d'un message chiffré comprenant des valeurs chiffrées de pixels, et d'une clef secrète individuelle (Iₛ) associée au dispositif électronique de réception (25),
la clef secrète individuelle (Iₛ) étant propre à déchiffrer uniquement les valeurs chiffrées de pixels correspondant à une ou plusieurs zones de l'image avec zone(s) obfusquée(s) (75) représentant des objets que le dispositif électronique de réception (25) est autorisé à consulter,
- déchiffrement (220), à partir d'un algorithme de déchiffrement et de la clef secrète individuelle (Iₛ) reçue, des valeurs chiffrées de pixels du message chiffré pour obtenir un message partiellement déchiffré, et
- reconstitution (230) d'une image partiellement reconstituée (77), par remplacement de la ou des zones obfusquées de l'image avec zone(s) obfusquée(s) (75) par des pixels dont les valeurs sont comprises dans le message partiellement déchiffré,
au moins une zone de l'image partiellement reconstituée (77) représentant un objet que le dispositif électronique de réception (25) est autorisé à consulter.

8. Produit programme d'ordinateur de réception comprenant des instructions logicielles, qui lorsqu'elles sont exécutées par un ordinateur, mettent en œuvre un procédé de réception (200) selon la revendication précédente.

9. Dispositif électronique de réception (25), depuis un dispositif électronique d'émission (20) selon la revendication 6, d'une image (75) avec au moins une zone obfusquée propre à représenter un objet,
le dispositif électronique de réception (25) comprenant :
- un module de réception (60) configuré pour recevoir l'image avec zone(s) obfusquée(s) (75), un message chiffré comprenant des valeurs chiffrées de pixels, et une clef secrète individuelle (Iₛ) associée audit dispositif électronique de réception (25),
la clef secrète individuelle (Iₛ) étant propre à déchiffrer uniquement les valeurs chiffrées de pixels correspondant à un ou plusieurs zones de l'image avec zone(s) obfusquée(s) (75) représentant des objets que le dispositif électronique de réception (25) est autorisé à consulter,
- un module de déchiffrement (62) configuré pour déchiffrer, à partir d'un algorithme de déchiffrement et de la clef secrète individuelle (Iₛ) reçue, les valeurs chiffrées de pixels du message chiffré pour obtenir un message partiellement déchiffré, et
- un module de reconstitution (64) configuré reconstituer une image partiellement reconstituée (77), par remplacement de la ou des zones obfusquées de l'image avec zone(s) obfusquée(s) (75) par des pixels dont les valeurs sont comprises dans le message partiellement déchiffré,
au moins une zone de l'image partiellement reconstituée (77) représentant un objet que le dispositif électronique de réception (25) est autorisé à consulter.

10. Système électronique de communication (10) comprenant un dispositif électronique d'émission (20) et des dispositifs électroniques de réception (25), dans lequel le dispositif électronique d'émission (20) est selon la revendication 6 et chaque dispositif électronique de réception (25) est selon la revendication 9.

## Patentansprüche

1. Sendeverfahren (100), von einer elektronischen Sendevorrichtung (20) aus und an mehrere elektronische Empfangsvorrichtungen (25) gerichtet, eines Bildes (37), das mehrere Objekte darstellt,
wobei das Sendeverfahren (100) durch die elektronische Sendevorrichtung (20) umgesetzt wird und eine Konfigurationsphase (110) umfasst, die den folgenden Schritt beinhaltet:
- Erfassen (112) einer Entsprechungstabelle, wobei die Entsprechungstabelle jeder elektronischen Empfangsvorrichtung (25) eine jeweilige Liste von Objekt(en) zuordnet, die die elektronische Empfangsvorrichtung (25) durch Entschlüsselung der verschlüsselten Nachricht, ausgehend von dem individuellen geheimen Schlüssel (Iₛ), einsehen darf,
- Bestimmen (114) eines öffentlichen Hauptschlüssels (Mₚ) und eines geheimen Hauptschlüssels (Mₛ),
- Berechnen (116), für jede elektronische Empfangsvorrichtung (25), des jeweiligen individuellen geheimen Schlüssels (Iₛ) ausgehend von dem geheimen Hauptschlüssel (Mₛ) und der Liste von Objekt(en), die der elektronischen Empfangsvorrichtung (25) in der Entsprechungstabelle zugeordnet ist,
- Senden (118) eines jeweiligen individuellen geheimen Schlüssels (Iₛ) an jede elektronische Empfangsvorrichtung (25),
wobei das Verfahren (100) ferner eine Verschlüsselungsphase (120) umfasst, die die folgenden Schritte beinhaltet:
- Erhalten (121) des Bildes (37), das die Objekte darstellt, in welchem eine oder mehrere Zonen (70), die bestimmten Pixel des Bildes beinhalten, identifiziert werden, wobei jede identifizierte Zone (70) eines der Objekte darstellt,
- Anwenden (124) einer Obfuskation auf die oder jede Zone (70) des Bildes (37), um ein Bild mit obfuskierten Zone(n) (75) zu bilden,
- Erzeugen (125) einer verschlüsselten Nachricht, die Werte der Pixel der Zonen in dem erhaltenen Bild umfasst, in welcher die Werte verschlüsselt sind, wobei die Werte der Pixel ausgehend von dem öffentlichen Hauptschlüssel (Mₚ) verschlüsselt werden,
wobei der Erzeugungsschritt (125) die folgenden Teilschritte umfasst:
∘ Speichern (126), in einer Nachricht, der Werte der Pixel, die der/den identifizierte(n) Zone(n) in dem Bild entsprechen,
∘ Anwenden (127) eines Verschlüsselungsalgorithmus auf die Werte der Pixel der Nachricht ausgehend von dem öffentlichen Hauptschlüssel (Mₚ), und einer Verschlüsselungspolitik, um die verschlüsselte Nachricht zu bilden, wobei die Verschlüsselungspolitikjeder identifizierten Zone (70) eine logische Beziehung zuordnet, die von dem oder den in der Zone dargestellten Objekten abhängt,
- Senden (128), an jede elektronische Empfangsvorrichtung (25), des Bildes mit obfuskierten Zone(n) (75) und der verschlüsselten Nachricht im Hinblick auf ihre zumindest teilweise Entschlüsselung durch jede elektronische Empfangsvorrichtung (25), um ein teilweise rekonstruiertes Bild (77), das der elektronischen Vorrichtung zum Empfang (25) zugeordnet ist, zu rekonstruieren,
wobei jeder individuelle geheime Schlüssel (Iₛ) ausgehend von der Entsprechungstabelle durch Anwendung einer Schlüsselerzeugungsfunktion eines attributbasierten Verschlüsselungsalgorithmus berechnet wird.

2. Verfahren (100) nach Anspruch 1, wobei der Schritt des Erhaltens (121) die folgenden Teilschritte umfasst:
- Erfassen (122) des Bildes (37), und
- Identifizieren (123) in dem erfassten Bild der Zone(n) (70), die jedes Objekt darstellen, ausgehend von einem Identifikationsmodell,
wobei der Identifikationsschritt (123) vorzugsweise durch ein Identifikationsmodell umgesetzt wird, das besonders vorzugsweise ein neuronales Netz umfasst.

3. Verfahren (100) nach Anspruch 1 oder 2, wobei der Verschlüsselungsalgorithmus aus der Gruppe ausgewählt ist, die besteht aus:
- dem BSW07-Algorithmus,
- dem CPW08-Algorithmus, und
- dem AC17-Algorithmus

4. Verfahren (100) nach einem der vorhergehenden Ansprüche, wobei
das erhaltene Bild (37) von einer Kamera (15, 15') stammt, die aus einer vordefinierten Liste von Kameras (15, 15') ausgewählt ist, wobei die Entsprechungstabelle jeder elektronischen Empfangsvorrichtung (25), für jedes Objekt, eine oder mehrere Kameras (15, 15') zuordnet, die geeignet sind, Bilder zu erfassen, für welche die elektronische Empfangsvorrichtung (25) berechtigt ist,
das Objekt einzusehen, wobei der oder jeder individuelle geheime Schlüssel (Iₛ) ferner von der oder den Kameras (15, 15') abhängig ist, die der entsprechenden elektronischen Empfangsvorrichtung (25) in der Entsprechungstabelle zugeordnet sind.

5. Computerprogrammprodukt zum Senden umfassend Softwareanweisungen, die, wenn sie ausgeführt werden, ein Sendeverfahren (100) nach einem der vorhergehenden Ansprüche umsetzen.

6. Elektronische Sendevorrichtung (20), an mehrere elektronische Empfangsvorrichtungen (25) gerichtet, eines Bildes (37), das mehrere Objekte aus einer vordefinierten Liste von Objekten darstellt, wobei die elektronische Sendevorrichtung (25) eine Konfigurationseinheit (30) umfasst, umfassend:
- ein Erfassungsmodul (42), das konfiguriert ist, um eine Entsprechungstabelle zu erfassen, wobei die Entsprechungstabelle jeder elektronischen Empfangsvorrichtung (25) eine jeweilige Liste von Objekt(en) zuordnet, die die elektronische Empfangsvorrichtung (25) durch Entschlüsselung der verschlüsselten Nachricht, ausgehend von dem individuellen geheimen Schlüssel, einsehen darf (Iₛ),
- ein Bestimmungsmodul (44), das konfiguriert ist, um einen öffentlichen Hauptschlüssel (Mₚ) und einen geheimen Hauptschlüssel (Mₛ) zu bestimmen, und
- ein Berechnungsmodul (46), das konfiguriert ist, um den jeweiligen individuellen geheimen Schlüssel (Iₛ) ausgehend von dem geheimen Hauptschlüssel (Mₛ) und der Liste von Objekt(en), die der elektronischen Empfangsvorrichtung (25) in der Entsprechungstabelle zugeordnet ist, zu berechnen,
- ein Sendemodul (40), das konfiguriert ist, um an die oder an jede elektronische Empfangsvorrichtung (25) einen jeweiligen individuellen geheimen Schlüssel (Iₛ) zu senden,
wobei die elektronische Sendevorrichtung (20) ferner eine Verschlüsselungseinheit (35) umfasst, die beinhaltet:
- ein Erhaltungsmodul (50), das konfiguriert ist, um das Bild (37) zu erhalten, das die Objekte darstellt, in welchem eine oder mehrere Zonen (70), die bestimmten Pixel des Bildes beinhalten, identifiziert werden, wobei jede identifizierte Zone (70) eines der Objekte darstellt,
- ein Anwendungsmodul (52), das konfiguriert ist, um eine Maskierung auf die oder jede Zone (70) des Bildes (37) anzuwenden, um ein Bild mit obfuskierten Zone(n) zu bilden,
- ein Erzeugungsmodul (54), das konfiguriert ist, um eine verschlüsselte Nachricht zu erzeugen, die Werte der Pixel der Zonen (70) in dem erhaltenen Bild (37) umfasst, in welcher die Werte verschlüsselt sind, wobei die Werte der Pixel ausgehend von einem öffentlichen Hauptschlüssel (Mₚ) verschlüsselt werden,
wobei das Erzeugungsmodul (54) konfiguriert ist, um:
∘ in einer Nachricht Werte der Pixel zu speichern, die der/den identifizierte(n) Zone(n) in dem Bild entsprechen,
∘ einen Verschlüsselungsalgorithmus auf die Werte der Pixel der Nachricht ausgehend von dem öffentlichen Hauptschlüssel (Mₚ), und einer Verschlüsselungspolitik anzuwenden, um die verschlüsselte Nachricht zu bilden, wobei die Verschlüsselungspolitik jeder identifizierten Zone (70) eine logische Beziehung zuordnet, die von dem oder den in der Zone dargestellten Objekten abhängt,
- ein Sendemodul (56), das konfiguriert ist, um an jede elektronische Empfangsvorrichtung (25) das Bild mit obfuskierten Zone(n) (75) und die verschlüsselte Nachricht im Hinblick auf ihre zumindest teilweise Entschlüsselung durch jede elektronische Empfangsvorrichtung (25) zu senden, um ein teilweise rekonstruiertes Bild (77), das der jeweiligen elektronischen Empfangsvorrichtung (25) zugeordnet ist, zu rekonstruieren,
wobei jeder individuelle geheime Schlüssel (Iₛ) ausgehend von der Entsprechungstabelle durch Anwendung einer Schlüsselerzeugungsfunktion eines attributbasierten Verschlüsselungsalgorithmus berechnet wird.

7. Empfangsverfahren (200), durch eine elektronische Empfangsvorrichtung (25) und
von einer elektronischen Sendevorrichtung (20) nach Anspruch 6 aus, eines Bildes (75) mit mindestens einer obfuskierten Zone, die geeignet ist, ein Objekt aus einer vordefinierten Liste von Objekt(en) darzustellen,
wobei das Verfahren (200) durch die elektronische Empfangsvorrichtung (25) umgesetzt wird, und die folgenden Schritte umfasst:
- Empfangen (210) des Bildes mit obfuskierten Zone(n) (75), einer verschlüsselten Nachricht, die verschlüsselte Werte von Pixeln umfasst, und eines individuellen geheimen Schlüssels (Iₛ), der der elektronischen Empfangsvorrichtung (25) zugeordnet ist,
wobei der individuelle geheime Schlüssel (Iₛ) geeignet ist, ausschließlich die verschlüsselten Werte von Pixeln zu entschlüsseln, die einer oder mehreren Zonen des Bildes mit obfuskierten Zone(n) (75) entsprechen, die Objekte darstellen, die die elektronische Empfangsvorrichtung (25) einsehen darf,
- Entschlüsseln (220), ausgehend von einem Entschlüsselungsalgorithmus und von dem empfangenen geheimen individuellen Schlüssel (Iₛ), der verschlüsselten Werte von Pixeln der verschlüsselten Nachricht, um eine teilweise entschlüsselte Nachricht zu erhalten, und
- Rekonstruieren (230) eines teilweise rekonstruierten Bildes (77), durch Ersetzung der einen oder mehreren obfuskierten Zonen des Bildes mit obfuskierten Zone(n) (75) durch Pixel, deren Werte in der teilweise entschlüsselten Nachricht enthalten sind,
wobei mindestens eine Zone des teilweisen rekonstruierten Bildes (77) ein Objekt darstellt, das die elektronische Empfangsvorrichtung (25) einsehen darf.

8. Computerprogrammprodukt zum Empfang, umfassend Softwareanweisungen, die, wenn sie durch einen Computer ausgeführt werden, ein Empfangsverfahren (200) nach dem vorhergehenden Anspruch umsetzen.

9. Elektronische Empfangsvorrichtung (25), von einer elektronischen
Sendevorrichtung (20) nach Anspruch 6 aus, eines Bildes (75) mit mindestens einer obfuskierten Zone, die geeignet ist, ein Objekt darzustellen,
wobei die elektronische Empfangsvorrichtung (25) umfasst:
- ein Empfangsmodul (60), das konfiguriert ist, um das Bild mit obfuskierten Zone(n) (75), eine verschlüsselte Nachricht, die verschlüsselte Werte von Pixeln umfasst, und einen individuellen geheimen Schlüssel (Iₛ), der der elektronischen Empfangsvorrichtung (25) zugeordnet ist, zu empfangen,
wobei der individuelle geheime Schlüssel (Iₛ) geeignet ist, ausschließlich die verschlüsselten Werte von Pixeln zu entschlüsseln, die einer oder mehreren Zonen des Bildes mit obfuskierten Zone(n) (75) entsprechen, die Objekte darstellen, die die elektronische Empfangsvorrichtung (25) einsehen darf,
- ein Entschlüsselungsmodul (62), das konfiguriert ist, um ausgehend von einem Algorithmus zur Entschlüsselung und von dem empfangenen individuellen geheimen Schlüssel (Iₛ) die verschlüsselten Werte von Pixeln der verschlüsselten Nachricht zu entschlüsseln, um eine teilweise entschlüsselte Nachricht zu erhalten, und
- ein Rekonstruktionsmodul (64), das konfiguriert ist, um ein teilweise rekonstruiertes Bild (77) zu rekonstruieren, durch Ersetzung der einen oder mehreren obfuskierten Zonen des Bildes mit obfuskierten Zone(n) (75) durch Pixel, deren Werte in der teilweise entschlüsselten Nachricht enthalten sind,
wobei mindestens eine Zone des teilweisen rekonstruierten Bildes (77) ein Objekt darstellt, das die elektronische Empfangsvorrichtung (25) einsehen darf.

10. Elektronisches Kommunikationssystem (10), umfassend eine elektronische Sendevorrichtung (20) und elektronische Empfangsvorrichtungen (25), wobei die elektronische Sendevorrichtung (20) nach Anspruch 6 ist und jede elektronische Empfangsvorrichtung (25) nach Anspruch 9 ist.

## Claims

1. A method of transmission (100), from an electronic transmitter device (20) to several electronic receiver devices (25), an image (37) representing several objects,
the transmission method (100) being implemented by the electronic transmitter device (20) and comprising a configuration phase (110) including the following step:
- acquisition (112) of a lookup table, the lookup table associating with each electronic receiver device (25) a respective list of object(s) that said electronic receiver device (25) is authorized to consult by decrypting the encrypted message, on the basis of said individual secret key (Iₛ),
- determination (114) of a master public key (Mₚ) and of a master secret key (Mₛ),
- calculation (116), for each electronic receiver device (25), of the respective individual secret key (Iₛ) from the master secret key (Mₛ) and the list of object(s) associated with said electronic receiver device (25) in the lookup table,
- sending (118) to each electronic receiver device (25) a respective individual secret key (Iₛ),
the method (100) further comprising an encryption phase (120) including the following steps:
- acquiring (121) the image (37) representing the objects, wherein one or a plurality of zones (70) including certain pixels of the image are identified, each identified zone (70) representing one of the objects,
- applying (124) an obfuscation to the or each zone (70) of the image (37), so as to form an image with obfuscated zone(s) (75),
- generating (125) an encrypted message comprising pixel values of the zones in the resulting image, wherein said values are encrypted, the pixel values being encrypted on the basis of the master public key (Mₚ),
the generatiing step (125) comprising the following sub-steps:
∘ storage (126), in a message, of pixel values corresponding to the zone(s) identified in the image,
∘ application (127) of an encryption algorithm to the values of the pixels of the message from the master public key (Mₚ) and an encryption policy, so as to form the encrypted message, the encryption policy associating with each identified zone (70) a logical relation depending on the object or the objects represented in said zone,
- transmitting (128) to the or each electronic receiver device (25), the image with obfuscated zone(s) (75) and the encrypted message for at least partial decryption, by each electronic receiver device (25) in order to reconstruct a partially reconstructed image (77) associated with the electronic receiver device (25),
wherein each individual secret key (Iₛ) is calculated from the lookup table by applying a key generation function of an attribute encryption algorithm.

2. The method (100) according to claim 1, wherein the acquiring step (121) comprises the following sub-steps:
- acquisition (122) of the image (37), and
- identification (123) in the acquired image of zone(s) (70) representing each object from an identification model,
the identification step (123) being preferentially implemented by an identification model comprising more preferentially a neural network.

3. The method (100) according to claim 1 or 2, wherein the encryption algorithm is chosen from the group consisting of:
- the BSW07 algorithm,
- the CPW08 algorithm, and
- the AC17 algorithm.

4. The method (100) according to any of the preceding claims, wherein the obtained image (37) comes from a camera (15, 15') chosen from a predefined list of cameras (15, 15'), the lookup table associating, for each electronic receiver device (25), for each object, one or a plurality of cameras (15, 15') suitable for taking images for which the electronic receiver device (25) is authorized to consult said object,
the or each individual secret key (Iₛ) further depending on the camera or cameras (15, 15') associated with the corresponding electronic receiver device (25) in the lookup table.

5. A transmission computer program product comprising software instructions which, when executed, implement a transmission method (100) according to any of the preceding claims.

6. An electronic transmitter device (20) for transmitting to several electronic receiver devices (25), an image (37) representing several objects among a predefined list of objects, the electronic transmitter device (20) comprising a configuration unit (30) comprising:
- an acquisition module (42) configured to acquire a lookup table, the lookup table associating with each electronic receiver device (25), a respective list of object(s) that said electronic receiver device (25) is authorized to consult by decrypting the encrypted message, on the basis of said individual secret key (Iₛ),
- a determination module (44) configured to determine a master public key (Mₚ) and a master secret key (Mₛ), and
- a calculation module (46) configured to calculate the respective individual secret key (Iₛ) from the master secret key (Mₛ) and from the list of object(s) associated with said electronic receiver device (25) in the lookup table,
- a sending module (40) configured to send to the or each electronic receiver device (25), a respective individual secret key (Iₛ),
the electronic transmitter device (20) further comprising at least one decryption unit (35) including:
- an acquisition module (50) configured to acquire the image (37) representing the objects, wherein one or more zones (70) including certain pixels of the image are identified, each identified zone (70) representing one of the objects,
- an application module (52) configured to apply a masking to the or each zone (70) of the image (37), to form an image with obfuscated zone(s),
- a generator module (54) configured to generate an encrypted message comprising values of pixels of the zones (70) in the obtained image (37), wherein said values are encrypted, the values of the pixels being encrypted from a master public key (Mₚ),
the generator module (54) being configured for:
∘ storing, in a message, of pixel values corresponding to the zone(s) identified in the image,
∘ applying an encryption algorithm to the values of the pixels of the message from the master public key (Mₚ) and an encryption policy, so as to form the encrypted message, the encryption policy associating with each identified zone (70) a logical relation depending on the object or the objects represented in said zone,
- a transmission module (56) configured to transmit, to each electronic receiver device (25), the image with obfuscated zone(s) (75) and the encrypted message for at least the partial decryption thereof, by each electronic receiver device (25), so as to reconstruct a partially reconstructed image (77) associated with the respective electronic receiver device (25),
wherein each individual secret key (Iₛ) is calculated from the lookup table by applying a key generation function of an attribute encryption algorithm.

7. A method of reception (200), by an electronic receiver device (25) and from an electronic transmitter device (20) according to claim 6, of an image (75) with at least one obfuscated zone suitable for representing an object from a predefined list of object(s),
the method (200) being implemented by an electronic receiver device (25) and comprising the following steps:
- reception (210) of the image with obfuscated zone(s) (75), of an encrypted message comprising encrypted pixel values, and of an individual secret key (Iₛ) associated with the electronic receiver device (25),
the individual secret key (Iₛ) being suitable for decrypting only the encrypted pixel values corresponding to one or a plurality of zones of the image with obfuscated zone(s) (75) representing objects which the electronic receiver device (25) is authorized to consult,
- decryption (220), on the basis of a decryption algorithm and the received individual secret key (Iₛ), of the encrypted pixel values of the encrypted message, so as to acquire a partially decrypted message, and
- reconstruction (230) of a partially reconstructed image (77), by replacing the obfuscated zone(s) of the image with obfuscated zone(s) (75) by pixels the values of which are comprised in the partially decrypted message,
at least one zone of the partially reconstructed image (77) representing an object that the electronic receiver device (25) is authorized to consult.

8. A reception computer program comprising software instructions which, when executed by a computer, implement a reception method (200) according to the preceding claim.

9. An electronic receiver device (25) for receiving, from an electronic transmitter device (20) according to claim 6, an image (75) with at least one obfuscated zone suitable for representing an object,
the electronic receiver device (25) comprising:
- a reception module (60) configured to receive the image with obfuscated zone(s) (75), an encrypted message comprising encrypted pixel values, and an individual secret key (Iₛ) associated with said electronic receiver device (25),
the individual secret key (Iₛ) being apt to decrypt only the encrypted pixel values corresponding to one or a plurality of zones of the image with obfuscated zone(s) (75) representing objects that the electronic receiver device (25) is authorized to consult,
- a decryption module (62) configured to decrypt, from a decryption algorithm and the received individual secret key (Iₛ), the encrypted pixel values of the encrypted message in order to acquire a partially decrypted message, and
- a reconstruction module (64) configured to reconstruct a partially reconstructed image (77) by replacing the obfuscated zone(s) of the image with obfuscated zone(s) (75) by pixels the values of which are comprised in the partially decrypted message,
at least one zone of the partially reconstructed image (77) representing an object that the electronic receiver device (25) is authorized to consult.

10. An electronic communication system (10) comprising an electronic transmitter device (20) and several electronic receiver devices (25),
wherein the electronic transmitter device (20) is according to claim 6 and each electronic receiver device (25) is according to claim 9.
